# FASCICULE DE BREVET EUROPEEN

(11) **EP 1 548 277 B1**
(45) Date de publication et mention de la délivrance du brevet: **07.06.2006**
(21) Numéro de dépôt: 03740502.4
(22) Date de dépôt: 09.07.2003
(51) Int. Cl.: F03D 1/06

(54) **ROTOR D'EOLIENNE A MULTIPLES CONDUITS DE VENT SEPARES**
ROTOR EINER WINDENERGIEANLAGE MIT MEHREREN SEPARATEN WINDKANÄLEN
WINDMILL ROTOR COMPRISING MULTIPLE SEPARATE WIND CHANNELS

(43) Date de publication de la demande: 29.06.2005
(73) Titulaire: Sanchez Sanchez, Felix, E-50010 Zaragoza (ES)
(72) Inventeur: Sanchez Sanchez, Felix, E-50010 Zaragoza (ES)
(74) Mandataire: Ravina, Bernard
(86) Numéro de dépôt international: PCT/ES2003/000344
(87) Numéro de publication internationale: WO 2005/005823

(56) Documents cités:
- DE-A1- 2 909 781
- GB-A- 213 022
- JP-A- 58 091 376
- US-A- 4 080 100
- US-A- 4 289 450
- US-A- 5 711 653

## Description

### OBJET DE L'INVENTION

L'objet de cette invention nommée rotor rond en nid d'abeilles disposant de plusieurs trapézoïdes courbés tubulaires est idéal pour les aérogénérateurs et les hélices en général. Ce rotor a pour objectif l'amélioration du rendement des aérogénérateurs et des hélices grâce à la fermeture totale de tous ses périmètres, effectuée par les cylindres concentriques tubulaires où se trouvent adossées les pièces courbées lesquelles sont à leur tour montée sur des cylindres tubulaires, le tout formant un nid d'abeilles rond, constitué en modules par l'assemblage de trapézoïdes circulaires courbés tubulaires. La force du vent traverse ces trapézoïdes, ce qui multiplie deux fois ou plus le nombre des trapézoïdes, ce qui à la fois multiplie vingt fois ou plus la surface de contact du vent. En ce qui concerne les rotors pour aérogénérateurs, l'exploitation de la force du vent est optime puisque l'on compte avec ces multiplications en nombre de trapézoïdes et en surface de contact du vent. En ce qui concerne les rotors a hélices en général, le même effet de multiplication du nombre des trapézoïdes se produit et par conséquent de la surface de contact du vent, à la fois que se multiplient les forces centrifuges propulsives, ce qui favorise au maximum l'exploitation de la force du vent.

### ÉTAT DE LA TECHNIQUE

La technique utilisée dans les rotors pour aérogénérateurs a plusieurs applications et présente diffèrentes dimensions. Le rotor est formé d'un noyau auquel trois ailes sont généralement annexées ; certains modèles ont les ailes orientables selon la direction du vent. Actuellement, les aérogénérateurs et les hélices en général ont leurs périmètres extérieurs totalement ouverts, ce qui explique que la majorité des forces centrifuges propulsives se perdent entre les ailes des hélices. En ce qui concerne les aérogénérateurs conventionnels, comme il a été dit antérieurement, les trois ailes qu'ils portent représentent une surface minimum de contact avec le vent, ce qui explique que l'exploitation de la force du vent sera d'assez bas rendement.

Le document DE 29 09 781 A1 est l'état de la technique le plus proche. Il décrit un rotor rond en nid d'abeilles pour aérogénérateurs et hélices en général avec trapézoïdes tubulaires courbés, est formé par une série de pièces (2, 3, 4, 5, 6) qui sont entourées de cylindres tubulaires. Au centre, le noyau se trouve fixé à l'alternateur ou au moteur (7), ce qui remplace les ailes conventionnelles. Sa principale caractéristique est que les périmètres de toutes ses pièces (2-6) ont une forme trapézoïdale arrondie tout en étant périphériquement fermés par des cylindres tubulaires, lesquels sont concentriques entre eux et rassemblés en modules. La position des pièces trapézoïdales entre les cylindres tubulaires concentriques peut coïncider ou s'alterner, pour former des tubes courbés trapézoïdaux unis entre eux. Cette structure a la forme d'un nid d'abeilles rond, avec le noyau (7) au milieu, placé sur l'alternateur ou le moteur. Chaque cylindre tubulaire aura quatre pièces (2-6), les cylindres étant rassemblés par paires. Toutes les pièces trapézoïdales seront courbes, ce qui facilitera une plus grande surface de contact du vent, et par conséquent maximisera la performance éolique. Le panneau rond des trapézoïdes tubulaires courbés peut avoir n'importe quelle forme géométrique, soit régulière ou irrégulière. proportionne à l'invention cette forme ronde en nid d'abeilles; dans les aérogénérateurs, le cylindre tubulaire ayant le plus grand diamètre portera à son entrée un entonnoir conique ayant son ouverture orientée vers l'extérieur afin d'augmenter la surface d'entrée du vent vers le rotor. Les trapézoïdes courbés tubulaires des aérogénérateurs conventionnels ont une entrée douce qui va en diminution vers la sortie tout en créant une légère pression. Ceci est naturel pour cette sorte d'aérogénérateur car il a les aires d'entrée et de sortie du vent orientées vers la même direction. Par contre dans cette invention, la courbe progressive des trapézoïdes courbée tubulaire dévie la direction du vent, ce qui réduit automatiquement la force du vent dans sa sortie, tout comme il se passe avec les aéroturbines. Les hélices en général ont des caractéristiques similaires aux aérorotors, en ajoutant à celles ci l'effet des forces centrifuges. Avec des vents réguliers, les aires de sortie du vent des trapézoïdes ronds, courbés et tubulaires devront être fixes ou calculées à l'avance pour obtenir une pression adéquate. Dans les régions de vents variables, les aires de sortie du vent seront automatiques. Ces trapézoïdes circulaires tubulaires se composent de plusieurs cylindres tubulaires concentriques qui ont des pièces courbes placées entre eux, formant un ensemble de trapézoïdes circulaires, courbés et tubulaires, d'oú sa forme en nid d'abeilles, raison principale de cette patente. Les trapézoïdes courbés tubulaires des aérogénérateurs et des hélices peuvent avoir n'importe quelle forme géométrique connue, pouvant être rond, tubulaire, ovale ou polygonal. Ils peuvent avoir autant de cotés réguliers ou irréguliers dont il sera nécessaire. A l'intérieur des trapézoïdes, des formes similaires peuvent être utilisées, étant aussi possible d'adopter d'autres formes, comme par exemple des trapézoïdes obliques ou n'importe quelles autres formes irrégulières, dont l'unique fonction serait celle de minimiser la force du vent. Le cylindre tubulaire ayant le plus grand diamètre a, dans la plupart des rotors a hélices, un entonnoir conique avec l'ouverture orientée vers l'intérieur qui réduit la surface de sortie du vent, ce qui en conséquence minimise la force du vent dans sa sortie.

Pour la plupart des hélices, les trapézoïdes tubulaires courbés ont les surfaces d'entrée du vent plus petites que celles de sortie, afin d'augmenter la pression du vent. Cette technique permet que la présente invention maximise l'effet des forces centrifuges et propulsives provenant du moteur. La même technique s'applique aux aérogénérateurs mais dans ce cas-ci les surfaces d'entrée du vent des trapézoïdes courbés, seront plus grandes que celles de sortie. L'effet sera donc contraire, c'est à dire qu'il y aura une réduction dans la pression de l'air, ce qui multiplié par la grande surface du rotor, produira une importante quantité d'énergie. Le résultat est le rendement maximum de la force du vent sur le rotor éolique.

Les rotors ronds en nid d'abeilles pour aérogénérateurs et hélices en général, ont plusieurs trapézoïdes ronds, courbés et tubulaires avec une surface qui se multiplie plus de vingt fois en comparaison avec les rotors conventionnels. Ses grandes surfaces de contact du vent amplifient la pression sur le rotor éolique grâce à la fermeture totale de tous ses périmètres extérieurs.

Les rotors ronds en nid d'abeilles pour aérogénérateurs et hélices en général, avec trapézoïdes ronds, courbés et tubulaires, présentent un grand avantage : celui de multiplier le nombre de trapézoïdes tout en multipliant la surface de contact du vent, c'est-à-dire la friction du vent sur les pieces courbes, ce qui maximise la force du vent sur le rotor, laquelle sera, la plupart des fois, amplifiée aussi. Sans oublier que les périmètres des trapézoïdes se trouveront complètement fermés par des cylindres concentriques tubulaires. Il sera optionnel d'avoir chaque rangée alignée symétriquement. En ceci consiste le fondement de la présente patente.

Les rotors ronds en nid d'abeilles pour aérogénérateurs et hélices en général seront capables de bouger dans deux directions. Ceci dépendra de la façon dont seront placées les pièces courbes qui se trouvent entre les trapézoïdes ronds, courbés et tubulaires.

### DESCRIPTION DES DESSINS

Le croquis 1, est une prise frontale du rotor rond en nid d'abeilles pour aérogénérateurs, où nous pouvons apprécier plusieurs cylindres tubulaires concentriques (1) (le dessin montre quatre cylindres tubulaires). Le cylindre tubulaire ayant le plus grand diamètre, a un entonnoir conique incorporé (4) avec l'ouverture orientée vers l'extérieur afin de maximiser la surface d'entrée du vent. Ces cylindres tubulaires ont des trapézoïdes tubulaires courbés (2) incorporés entre chacun d'eux (le dessin montre douze/dix/huit/six trapézoïdes courbés entre chaque cylindre concentrique, en commençant par celui avec le plus grand diamètre et s'alternant d'un diamètre à l'autre). Ceci expliquerait la forme ronde en nid d'abeilles individuellement composée de trapézoïdes tubulaires courbés (5). Finalement, nous apprécions le noyau (3) au centre, où se trouve incorporé l'axe de l'alternateur.

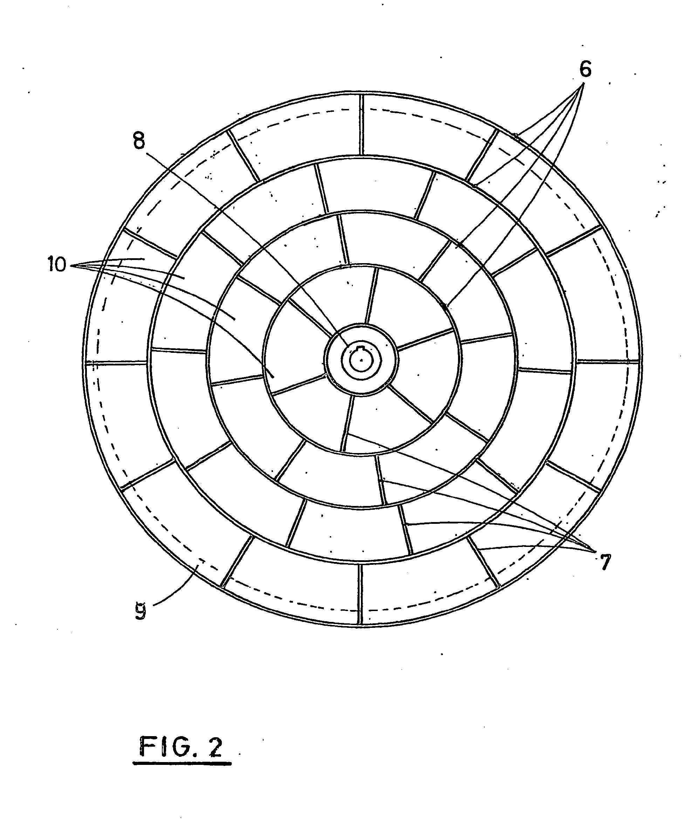

Le dessin 2 est une prise frontale du rotor rond en nid d'abeilles pour la plupart des hélices, où nous pouvons apprécier plusieurs cylindres concentriques tubulaires (6) (le dessin en montre quatre). Le cylindre tubulaire avec le plus grand diamètre, a un entonnoir conique incorporé (9) avec l'ouverture vers l'intérieur de façon que la surface de sortie du vent soit minimisée. Ces cylindres concentriques ont à leur tour, des pièces courbées (7) incorporées entre chacun d'eux (le dessin montre douze/dix/huit/six pièces courbées entre chaque cylindre concentrique, en commençant par celui ayant le plus grand diamètre et s'alternant d'un diamètre a l'autre). Ceci expliquerait la forme ronde en nid d'abeilles individuellement composée de trapézoïdes tubulaires courbés (10). Finalement, nous apprécions le noyau (8) au centre, où se trouve incorporé l'axe de l'alternateur.

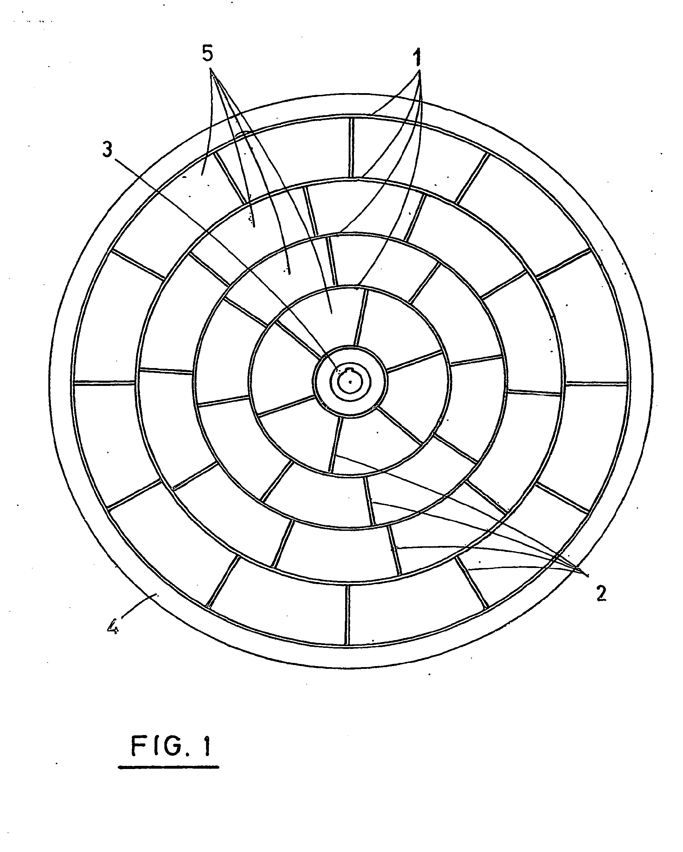

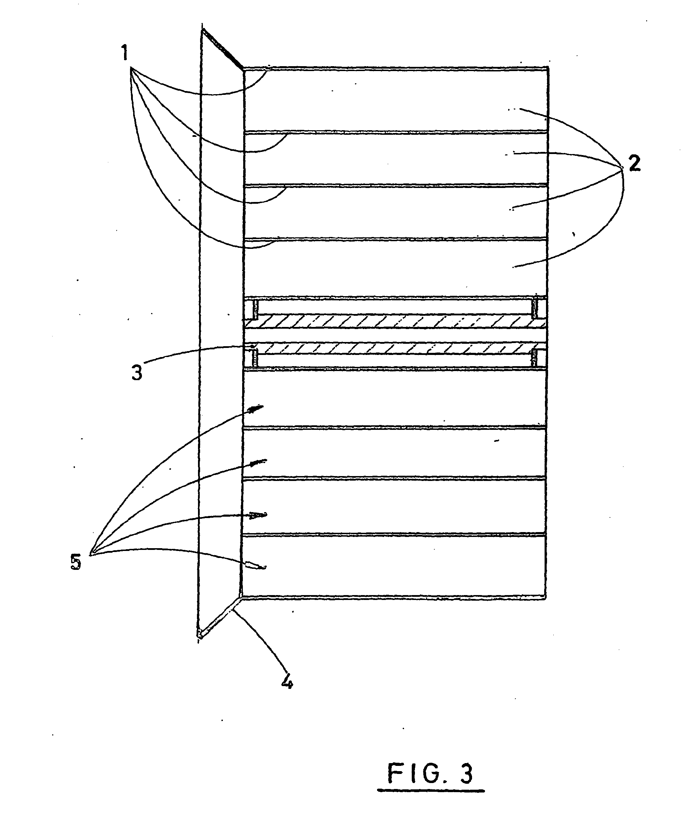

Le dessin 3 montre une section du dessin 1, où nous pouvons apprécier un cylindre tubulaire concentrique sectionné (1), avec le noyau placé au centre (3) et les proportions d'épaisseur des trapézoïdes (2), étant possible d'apprécier leur courbure. Nous pouvons également voir comment un entonnoir conique avec l'ouverture vers l'extérieur (4) est placé sur le cylindre tubulaire de plus grand diamètre. Les trapézoïdes ronds, tubulaires et courbés (5) comptent également avec des flèches indicatrices de la direction du vent.

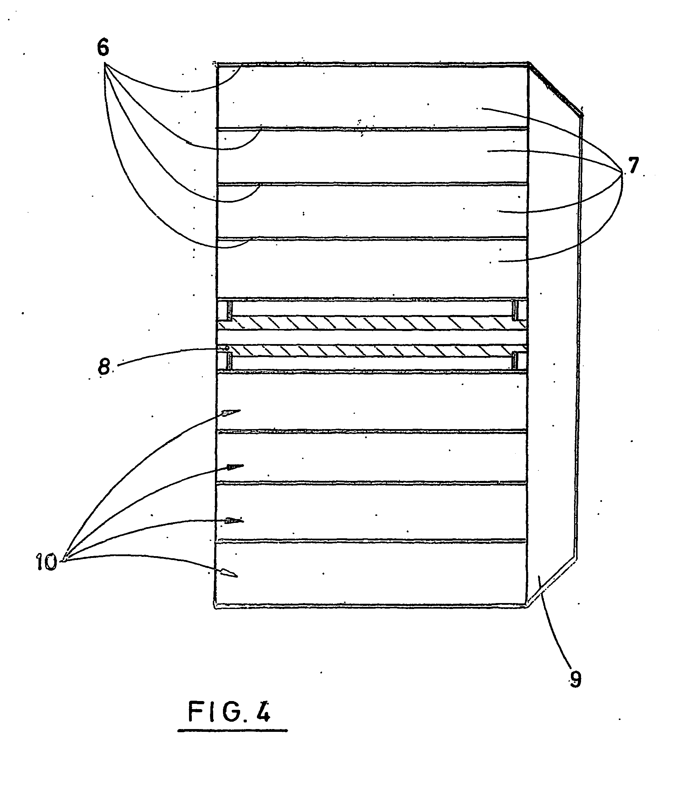

Le dessin 4 montre une section du dessin 2, où nous pouvons voir plusieurs cylindres tubulaires concentriques (6), avec le noyau au centre (8) et les proportions d'épaisseur des trapézoïdes (7). Nous pouvons aussi apprécier comment un entonnoir conique avec l'ouverture vers l'intérieur (4) est placé sur le cylindre tubulaire de plus grand diamètre, de façon que la surface de sortie du vent soit minimiser au maximum. Les trapézoïdes ronds, courbés et tubulaires (10) comptent également avec des flèches indicatrices de la direction du vent.

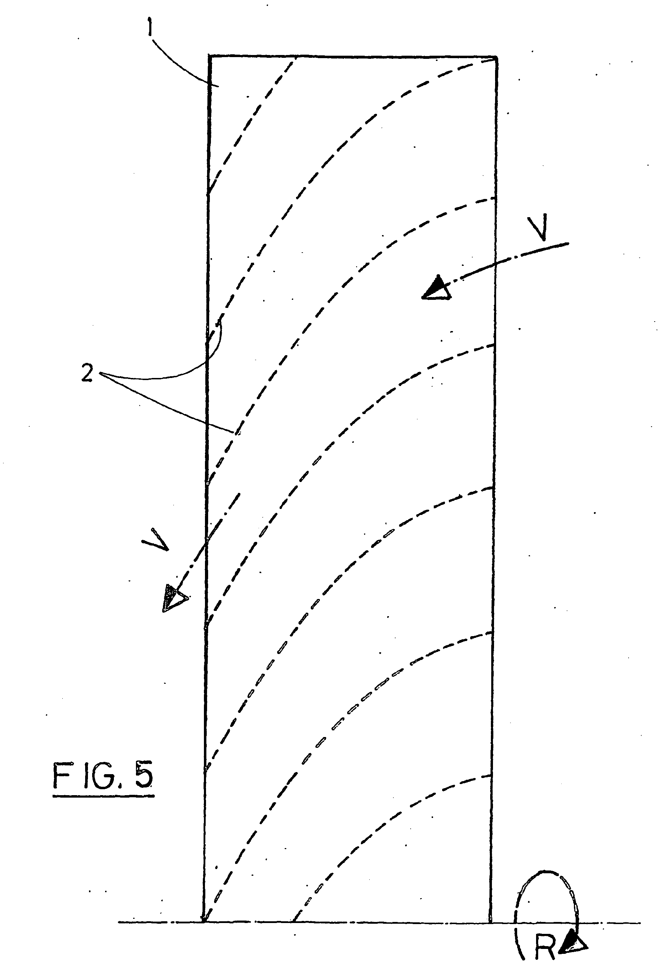

Le dessin 5 montre la moitié d'une section du plus grand des cylindres tubulaires d'un aérogénérateur, où l'on peut apprécier la courbure des pièces logées entre chacun des trapézoïdes ronds, courbés et tubulaires. Il est aussi possible d'apprécier la réduction de la surface de sortie du vent de ces aérogénérateurs selon la direction de la flèche "V", et le sens de virement du vent indiqué par la direction de la flèche "R".

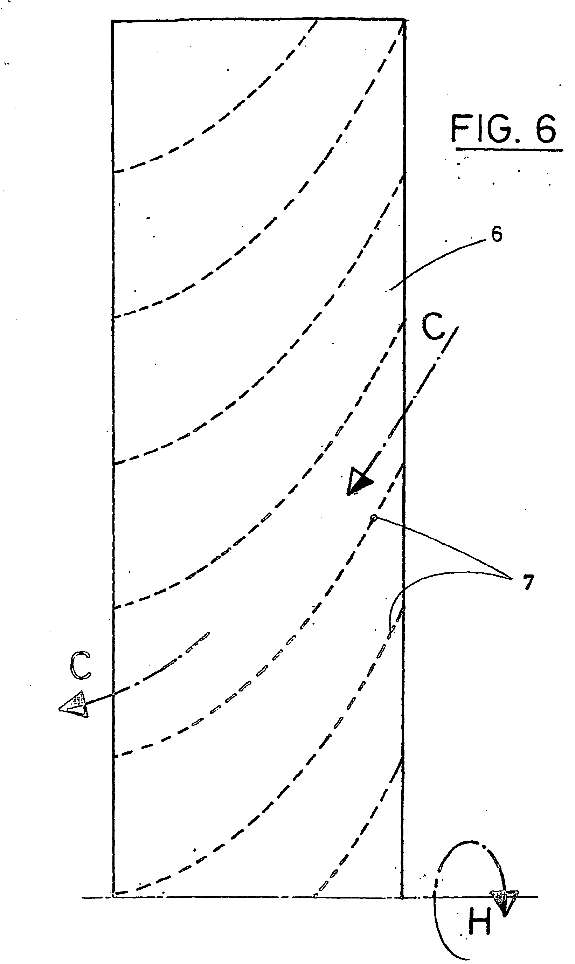

Le dessin 6 montre la moitié d'une section du plus grand des cylindres tubulaires de la plupart des hélices, où l'on peut apprécier la courbure des pièces logées entre chacun des trapézoïdes ronds, courbés et tubulaires. Il est aussi possible d'apprécier la réduction de la surface d'entrée du vent, étant plus grande la surface de sortie ; la direction de l'entrée du vent est indiquée par la flèche "C" et le sens de virement du vent est indiqué par la flèche "H".

### DESCRIPTION D'UNE PERFORMANCE PRÉFÉRENTIELLE

Le rotor rond en nid d'abeilles pour aérogénérateurs et hélices en général, avec quatre trapézoïdes ronds, courbés et tubulaires (peut en avoir plus de quatre), est formé d'un noyau (3,7) qui représente le centre du rotor; de deux cylindres tubulaires (1,5) (peut en avoir plus de deux), montés concentriquement avec des pièces (2,6) entre eux et formant les trapézoïdes ronds, courbés et tubulaires.

Dans les rotors pour aérogénérateurs, le cylindre tubulaire de plus grand diamètre (1) a un entonnoir conique (4) logé à son entrée avec l'ouverture orientée vers l'extérieur.

Dans les rotors pour hélices en général, le cylindre tubulaire de plus grand diamètre (5) a un entonnoir conique (8) logé à sa sortie avec l'ouverture vers l'intérieur. Toutes ces différentes pièces peuvent être assemblées selon les méthodes traditionnelles de jointure, comme par exemple par soudage, rivetage ou vissage. Les dimensions des rotors pour aérogénérateurs peuvent varier selon leur capacité. Les diamètres seront similaires aux dimensions des aérogénérateurs traditionnels. Les matériaux à utiliser devront être légers, métalliques et anticorrosifs. Il est recommandable pour les rotors a hélices, lesquels sont, en général, plus petits, l'utilisation de fonte ou d'alliage de matériaux légers très résistants et des revêtissements plastiques.

Les trapézoïdes ronds, courbés et tubulaires (2) pour aérogénérateurs seront assemblés de façon que la sortie du vent se voit minimisée. Ceci est possible parce que les surfaces d'entrée du vent sont plus grandes que celles de sortie, ce qui facilite qu'une légère pression éolique se produise, laquelle est très importante due à la grande surface du rotor. Ceci est indiqué par la direction de la flèche "V" selon le dessin 5.

Dans les rotors ronds en nid d'abeilles, les pièces des hélices ainsi que les trapézoïdes ronds, courbés et tubulaires (7) seront plus petits pour les surfaces d'entrée du vent que pour celles de sortie, comme l'indique la direction de la flèche "C", selon le dessin 6.

Le noyau (3,8) se trouve logé sur l'axe de l'alternateur ou sur le moteur, selon ses caractéristiques de jointure.

## Revendications

1. Rotor rond en nid d'abeilles pour aérogénérateurs et hélices en général avec trapézoïdes tubulaires courbés, formé par une série de pièces (2,7), qui sont entourées de cylindres tubulaires (1,6), au centre le noyau se trouvant fixé à l'alternateur ou au moteur (3,8), ce qui remplace les ailes conventionnelles, la principale caractéristique du rotor étant que les périmètres de toutes ses pièces (2,7) ont une forme trapézoïdale arrondie tout en étant périphériquement fermés par des cylindres tubulaires (1,6), lesquels sont concentriques entre eux et rassemblés en modules; la position des pièces trapézoïdales entre les cylindres tubulaires concentriques pouvant coïncider ou s'alterner, pour former des tubes courbés trapézoïdaux (5,10) unis entre eux; cette structure ayant la forme d'un nid d'abeilles rond, avec le noyau (3,8) au milieu, placé sur l'alternateur ou le moteur; chaque cylindre tubulaire (1,6) ayant au moins quatre pièces (2,7), les cylindres étant rassemblés par paires, toutes les pièces trapézoïdales (2,6) étant courbes, le panneau rond des trapézoïdes tubulaires courbés pouvant avoir n'importe quelle forme géométrique, soit régulière ou irrégulière, **caractérisé par** des pièces d'application (2) en forme de trapézoïde rond courbé, qui forment des tubes (5) unis entre eux par des cylindres concentriques (1), les surfaces d'entrée du vent étant plus grandes que les surfaces de sortie, afin que la courbure progressive des trapézoïdes dévie le vent vers une autre direction la réduction des surfaces de sortie du vent dans ces trapézoïdes (2) produisant une légère pression, et le cylindre tubulaire de plus grand diamètre (1) ayant dans son entrée un entonnoir (4) conique s'ouvrant vers l'extérieur.

2. Rotor rond en nid d'abeilles avec trapézoïdes tubulaires courbés selon la revendication 1 ayant des trapézoïdes (7) formant avec les cylindres concentriques (6) des tubes trapézoïdaux courbés (10), ce qui lui donne cette forme en nid d'abeilles rond, **caractérisé par** les trapézoïdes ronds, courbés et tubulaires (7) qui ont les surfaces d'entrée du vent plus petites que les surfaces de sortie, le cylindre tubulaire (6) de plus grand diamètre ayant un entonnoir tubulaire conique (9) placé à sa sortie.

## Claims

1. Round honeycomb rotors for wind-driven generators and propellers in general, with curved tubular trapezoids, made up by a series of parts (2, 7), and at the same time surrounded by tubular cylinders (1, 6), in the centre a nucleolus assembled on the alternator or on the motor (3,8), which allows the substitution of the conventional blades, since the main characteristic of the rotor is based on the fact that the perimeters of all the parts (2, 7) have a rounded trapezoidal shape and are at the same time enclosed on the perimeter by means of tubular cylinders (1, 6), concentric one to the other and grouped together in modules. The position of the trapezoidal parts between the concentric tubular cylinders can be coincident or alternate, in such a way as these form trapezoidal curved tubes (5, 10) joined together, said structure being reminiscent of a round honeycomb, with the central nucleolus (3, 8) directly assembled on the alternator or on the motor, with each tubular cylinder (1, 6) being of at least four parts (2, 7)- the cylinders being grouped together in pairs, all the trapezoidal parts (2, 6) are curved in shape, and the curved tubular trapezoid round panel may be of any geometric shape, either regular or irregular, **characterised by** application parts (2) in the shape of curved round trapezoids made up of tubes (5) joined together by means of concentric cylinders (1), the wind entry surface areas are smaller than the exit surface areas in such a way as the progressive curvature of the trapezoids diverts the wind in another direction, the smaller exit surface areas within these trapezoids (2) generate a slight pressure and the biggest diameter tubular cylinder (1) is provided on the inside with a conical funnel (4) pointing towards the outside.

2. Round honeycomb rotor with curved tubular trapezoids, in keeping with claim 1, in which it is indicated that said trapezoids (7) make up together with the concentric cylinders (6) curved trapezoidal tubes (10), which give this rotor a shape that is reminiscent of a round honeycomb, **characterised by** round, curved, tubular trapezoids (7) whose wind entry surface areas are smaller that the exit surface areas, the tubular cylinder (6) of the biggest diameter is provided with a conical tubular funnel (9) on the exit.

## Patentansprüche

1. Runder Wabenrotor für Windkraftgeneratoren und Luftschrauben ganz allgemein, mit gebogenen, röhrenförmigen Trapezoiden, bestehend aus einer Reihe von Teilen (2, 7), die ihrerseits von röhrenförmigen Zylindern (1, 6) umgeben sind, der Kern in der Mitte ist am Generator oder am Motor (3, 8) befestigt, wodurch die herkömmlichen Schraubenblätter ersetzt werden können, denn das Hauptmerkmal des Rotors besteht darin, dass die Außenflächen aller Teile (2, 7) trapezoidförmig und abgerundet und an ihrem Perimeter geschlossen sind, mittels röhrenförmiger Zylinder (1, 6), konzentrisch einer zum anderen und in Modulen gruppiert, die Position der trapezförmigen Teile zischen den röhrenförmigen konzentrischen Zylindern kann koinzident oder alternativ sein, so dass sie gebogene trapezförmige Rohre (5, 10) bilden, die miteinander verbunden sind, und diese Struktur lässt an eine runde Wabe denken, mit einem Zentralkern (3, 8), der direkt am Generator oder am Motor befesttigt ist, und jeder röhrenförmige Zylinder (1, 6) verfügt mindestens über vier Teile (2, 7) - die Zylinder sind paarweise gruppiert - alle trapezförmigen Teile (2, 6) sind gekrümmt und das runde Paneel der gebogenen röhrenförmigen Trapezoide kann eine beliebige geometrische Form besitzen, sowohl eine regelmäßige als auch unregelmäßige, **gekennzeichnet durch** Anwendungsteile (2) in Form von runden, gebogenen Trapezoiden, die Rohre (5) bilden, die untereinander **durch** konzentrische Zylinder (1) verbunden sind, und die Eingangsflächen des Windes sind kleiner als die Ausgangsflächen, so dass die progressive Biegung der Trapezoide den Wind in eine andere Richtung umlenkt, die reduzierten Ausgangsflächen des Windes innerhalb dieser Trapezoiden (2) erzeugen einen leichten Druck und der röhrenförmige Zylinder mit dem größten Durchmesser (1) ist an seinem Eingang mit einem nach außen gerichteten konischen Trichter (4) versehen.

2. Runder Wabenrotor mit gebogenen röhrenförmigen Trapezoiden entsprechend Anspruch 1, in dem gesagt wird, dass diese Trapezoiden (7) mit den konzentrischen Zylindern (6) gebogene trapezförmige Rohre bilden (10), was diesem Rotor eine Form verleiht, die an eine runde Wabe erinnert, **gekennzeichnet durch** gebogene, röhrenförmige und runde Trapezoide (7), deren Windeingangsflächen kleiner sind als die AusgangsfLächen; der röhrenförmige Zylinder (6) mit dem größten Durchmesser seinerseits ist an seinem Ausgang mit einem röhrenförmigen konischen Trichter (9) versehen.
